(19) Europäisches Patentamt
European Patent Office
Office européen des brevets

(11) **EP 2 787 891 B1**

(12) **FASCICULE DE BREVET EUROPEEN**

(45) Date de publication et mention
de la délivrance du brevet:
**12.06.2019 Bulletin 2019/24**

(21) Numéro de dépôt: **12795450.1**

(22) Date de dépôt: **05.12.2012**

(51) Int Cl.:
*A61B 6/03* *(2006.01)* *G01N 23/04* *(2018.01)*
*G01V 5/00* *(2006.01)*

(86) Numéro de dépôt international:
**PCT/EP2012/074543**

(87) Numéro de publication internationale:
**WO 2013/083648 (13.06.2013 Gazette 2013/24)**

(54) **PROCEDE DE RADIOGRAPHIE D'UNE CHARGE POUR REALISER UNE DÉTECTION**

VERFAHREN ZUR RADIOGRAPHIE EINER LAST ZUR AUSFÜHRUNG EINER ERKENNUNG

METHOD FOR THE RADIOGRAPHY OF A LOAD FOR PERFORMING DETECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.12.2011 FR 1161152**

(43) Date de publication de la demande:
**15.10.2014 Bulletin 2014/42**

(73) Titulaire: **Smiths Heimann SAS
94400 Vitry Sur Seine (FR)**

(72) Inventeurs:
• **DESAUTE, Pascal
F-75020 Paris (FR)**
• **DORION, Irène
F-75011 Paris (FR)**
• **DUMAY, Nicolas
F-78720 Dampierre En Yvelines (FR)**

(74) Mandataire: **Lavoix
2, place d'Estienne d'Orves
75441 Paris Cedex 09 (FR)**

(56) Documents cités:
**EP-A2- 2 293 049      JP-A- 63 181 740
US-A- 4 069 422      US-A- 4 472 823
US-A- 4 907 157**

## Description

La présente invention est relative à un procédé de radiographie d'une charge pour réaliser une détection, selon le préambule de la revendication 1.

Pour détecter la présence d'objets suspects tels que des objets de contrebande, des armes ou des engins explosifs, il est connu d'utiliser des installations de radiographie à rayons X pour élaborer une image par transmission du contenu de la charge. De tels dispositifs sont utilisés, par exemple, dans les aéroports, afin de contrôler les bagages des passagers. Ils sont également utilisés dans différents points de contrôle, en particulier dans les douanes pour contrôler le contenu de conteneurs ou de remorques de camion.

En général, ces installations de radiographie fournissent une image en niveaux de gris ou en couleurs du contenu des charges. La reconnaissance des objets contenus dans la charge est effectuée par un opérateur qui regarde les images fournies par l'installation. On comprend qu'une détection efficace requiert une image de bonne qualité et pertinente.

Plus précisément, dans des installations connues, la source émet des impulsions de rayons X à une fréquence de l'ordre de 200 Hz pour éclairer des tranches successives de la charge. Le rayonnement transmis par la charge traverse des capteurs de réception situés dans le prolongement du faisceau incident. Ces capteurs mesurent une dose de rayons X reçue. En général, les tranches radiographiées sont verticales et les signaux transmis par les capteurs de réception sont convertis en valeurs de pixels pour former une colonne de l'image présentée à l'opérateur.

Dans la source, les rayons X sont obtenus en dirigeant sur une cible métallique un flux d'électrons accélérés à une énergie donnée, de typiquement quelques MeV. La décélération des électrons dans la cible provoque l'émission de photons X, dont l'énergie est comprise entre 0 et quelques MeV. L'émission se fait principalement dans l'axe du faisceau d'électrons, mais aussi dans toutes les directions angulaires autour de cet axe.

Or, en raison de certaines instabilités des installations de radiographie, des tranches successives d'une même charge ne sont pas éclairées de la même façon. D'une part, les sources de rayons X utilisées ne sont pas stables dans le temps. Elles connaissent une évolution de l'intensité du faisceau pendant la détection. Il existe aussi des instabilités d'une impulsion à l'autre, affectant l'intensité des impulsions aussi bien que les propriétés spectrales du faisceau incident. D'autre part, les installations peuvent être affectées par des instabilités mécaniques concernant la position relative des capteurs et de la source de rayons X.

Ces instabilités engendrent une dégradation de l'image radiographique obtenue, par exemple des stries verticales ou des d'intensités inégales d'une ligne à l'autre.

Pour pallier ce problème, des installations radiographiques de l'état de la technique comprennent un bloc de référence comportant un capteur intermédiaire de rayons X situé dans le faisceau incident, entre la source et la charge à radiographier. Ce capteur est placé à l'écart de la cible et occupe, vu depuis la source, un angle solide le plus réduit possible afin de minimiser la perturbation du faisceau incident. Son rôle est d'enregistrer une dose de rayons X reçue, et ce au même moment que les capteurs de réception. Il est ainsi possible de corriger les doses reçues par les capteurs de réception en fonction de la dose reçue par le capteur du bloc de référence.

Toutefois, il a été observé qu'une telle correction n'est pas toujours suffisante et que la qualité des radiographies obtenue n'est pas toujours de nature à permettre une détection adéquate.

Ceci est en particulier le cas si l'on souhaite obtenir des informations sur la nature chimique des matières traversées par les rayons X. Une telle détection peut être réalisée en éclairant successivement chaque tranche de la charge par des impulsions de rayons X obtenus en appliquant des tensions d'accélération des électrons différentes et en comparant les images obtenues à des valeurs prédéfinies. Mais ceci peut s'avérer difficile et imprécis en pratique, notamment compte tenu des instabilités précitées.

De tels procédés de radiographie de charges sont notamment décrits par les documents US 4 907 157, US 4 069 422 et EP 2 293 049.

Un but de l'invention est de fournir un procédé de radiographie d'une charge pour réaliser une détection, fournissant des images d'une qualité améliorée, permettant, le cas échéant, d'obtenir des informations sur la nature chimique des matériaux traversés.

A cet effet, l'invention a pour objet un procédé de radiographie selon la revendication 1.

Par secteurs angulaires du faisceau incident « distincts », on entend que les directions angulaires comprises dans ces secteurs angulaires traversant les capteurs intermédiaires du bloc de référence correspondent avantageusement à des angles distincts d'au moins 1°, de préférence d'au moins 5°, et de manière encore plus préférée d'au moins 20° dans le plan médian.

Selon des modes particuliers de réalisation, le procédé de radiographie peut comprendre une ou plusieurs des caractéristiques des revendications dépendantes, prise(s) isolément ou selon toutes les combinaisons techniquement possibles.

L'invention sera mieux comprise à la lecture de la description qui va suivre, donnée uniquement à titre d'exemple et faite en se référant aux dessins annexés sur lesquels :

- la Figure 1 représente une installation de radiographie en vue de côté et en coupe ;
- la Figure 2 est une vue de dessus de la source de rayons X et du bloc de référence de l'installation de radiographie représentée sur la Figure 1 ;

- la Figure 3 représente le bloc de référence illustré sur la Figure 2 en vue de côté ;
- la Figure 4 est un graphique représentant une simulation, pour trois impulsions de rayons X d'énergies intrinsèques différentes, des doses reçues par les capteurs intermédiaires du bloc de référence de l'installation représentée sur la Figure 1 en fonction de l'angle correspondant à ces capteurs ;
- la Figure 5 est un graphique représentant une simulation des doses reçues par les capteurs de réception en fonction de l'angle correspondant à ces capteurs ;
- la Figure 6 est un graphique représentant les ratios obtenus en divisant les doses reçues par les capteurs de réception par celles reçues par les capteurs intermédiaires, les doses reçues ayant été normalisées ;
- la Figure 7 représente une variante du dispositif illustré par la Figure 2.

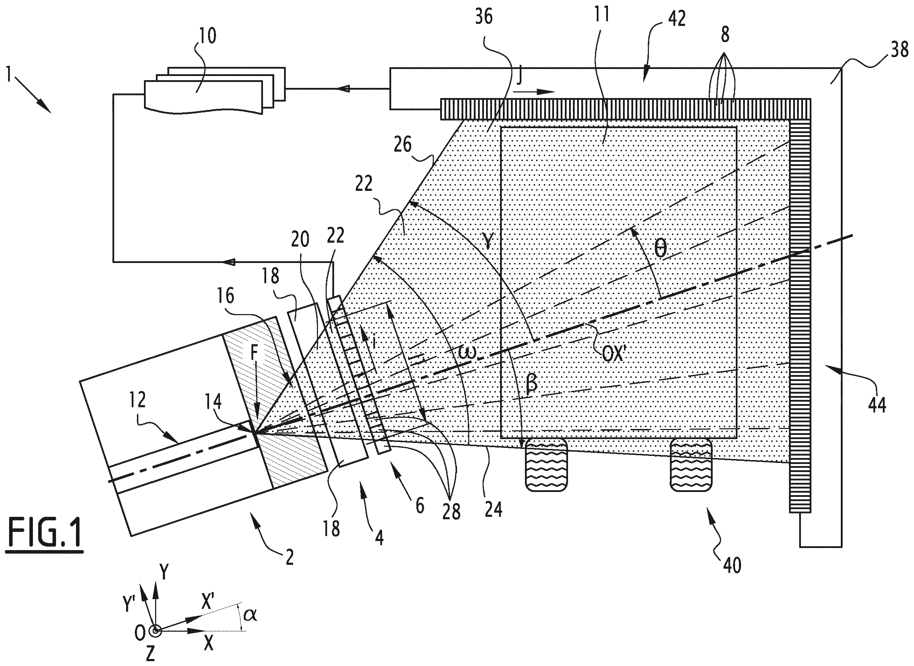

Sur la Figure 1, on a représenté une installation de radiographie 1. L'installation 1 sera décrite en référence à un repère orthonormé OXYZ, l'axe OY étant la verticale ascendante, le plan XOY étant vertical, le plan XOZ étant horizontal.

L'installation comprend une source 2 de rayons X, un collimateur 4, un bloc de référence 6, des capteurs de réception 8 et un dispositif de commande et de traitement des signaux 10. Elle est destinée à radiographier une charge 11.

La source 2 de rayons X comprend un dispositif de production et d'accélération d'un faisceau d'électrons 12. Elle comprend en outre une cible 14 pour le faisceau d'électrons comprenant un métal tel que du tungstène et du cuivre de manière à générer une impulsion 16 de rayons X divergent à partir d'un point focal F.

Les photons de l'impulsion 16 de rayons X sont par exemple générés par l'effet dit de rayonnement de freinage ou *Bremsstrahlung.* L'énergie des photons est comprise entre 0 et une valeur maximale E qui sera désignée par la suite par l'expression « énergie intrinsèque» ou « paramètre d'énergie intrinsèque ». Cette énergie intrinsèque E correspond à la transformation intégrale de l'énergie cinétique des électrons accélérés en énergie radiative. Les électrons sont généralement accélérés sous une tension comprise entre 1 MV et 10 MV, aussi l'énergie intrinsèque du faisceau est comprise entre 1 MeV et 10 MeV.

Dans une première variante, la source 2 de rayons X émet des impulsions 16 successives de rayons X ayant sensiblement la même énergie intrinsèque E, généralement comprise entre 1 MeV et 10 MeV, par exemple environ 4 MeV. Les impulsions 16 sont émises à une fréquence donnée, comprise entre 50 Hz et 1000 Hz, par exemple environ 200 Hz.

Dans une seconde variante, la source 2 de rayons X émet alternativement des impulsions 16 de rayons X à haute énergie intrinsèque E1, par exemple supérieure ou égale à environ 6 MeV, puis à basse énergie intrinsèque E2, par exemple inférieure ou égale à environ 4 MeV. Ce mode est dit « entrelacé ». Les impulsions sont émises à une fréquence donnée, par exemple environ 400 Hz.

L'intensité des impulsions 16 de rayons X est maximale dans une direction OX', dite « direction principale », appartenant au plan XOY, située dans le prolongement du faisceau d'électrons accélérés. Dans l'exemple représenté sur la Figure 1, la direction OX' fait un angle α positif avec l'axe OX, compris entre 10° et 20°, par exemple environ 13°. On définit en outre une direction OY' perpendiculaire à la direction OX', le repère OX'Y'Z étant orthonormé.

Le collimateur 4 s'étend en sortie de la source 2 de rayons X sensiblement selon la direction OY'. Il comporte une paroi 18 sensiblement opaque au rayons X délimitant une fente 20 orientée dans le plan XOY selon la direction OY'. Ainsi le collimateur 4 est apte à engendrer un faisceau incident 22 de rayons X essentiellement compris dans le plan XOY, qui est un plan médian pour le faisceau incident.

Avantageusement, la fente 20 présente une longueur l1 selon la direction OY' comprise entre 20 cm et 100 cm et sa largeur entre 0,5 mm et 10 mm.

L'épaisseur e du faisceau incident engendré à la sortie du collimateur 4 selon l'axe OZ est ainsi sensiblement égale à la largeur l2 de la fente.

Dans plan médian XOY, le faisceau incident 22 présente une ouverture angulaire ω s'étendant depuis une direction inférieure 24 faisant un angle β avec l'axe principal OX' jusqu'à une direction supérieure 26 faisant un angle γ avec l'axe OX'. L'ouverture ω mesurée depuis le point focal F dans le plan XOY est comprise par exemple entre 30° et 70° et notamment de l'ordre de 50°.

La source 2 de rayons X et le collimateur 4 sont disposés à une distance de quelques mètres de la charge 11, telle que le faisceau incident 22 permet d'éclairer la totalité de la charge 11 dans le plan médian XOY.

Le bloc de référence 6 est destiné à être interposé entre le collimateur 4 et la charge 11 pour être traversé par au moins une partie du faisceau incident 22.

Le bloc de référence 6 s'étend sensiblement selon la direction OY', c'est-à-dire qu'il est sensiblement perpendiculaire à la direction principale OX' du faisceau incident 22. Plus précisément, dans cet exemple, le bloc de référence 6 est placé en regard de la fente 20 du collimateur 4 de manière à être traversé par toute l'étendue angulaire ω du faisceau incident 22.

Le bloc de référence 6 comprend une pluralité de capteurs intermédiaires 28 de rayons X.

Les capteurs intermédiaires 28 du bloc de référence 6 et les capteurs de réception 8 sont numérotés et individuellement connectés électriquement au dispositif de commande et de traitement des signaux 10.

Chaque capteur intermédiaire 28 comporte un scintillateur 30 monté sur un circuit imprimé 32.

Le circuit imprimé 32 de chaque capteur intermédiaire 28 comprend une photodiode et une capacité électrique (non représentées).

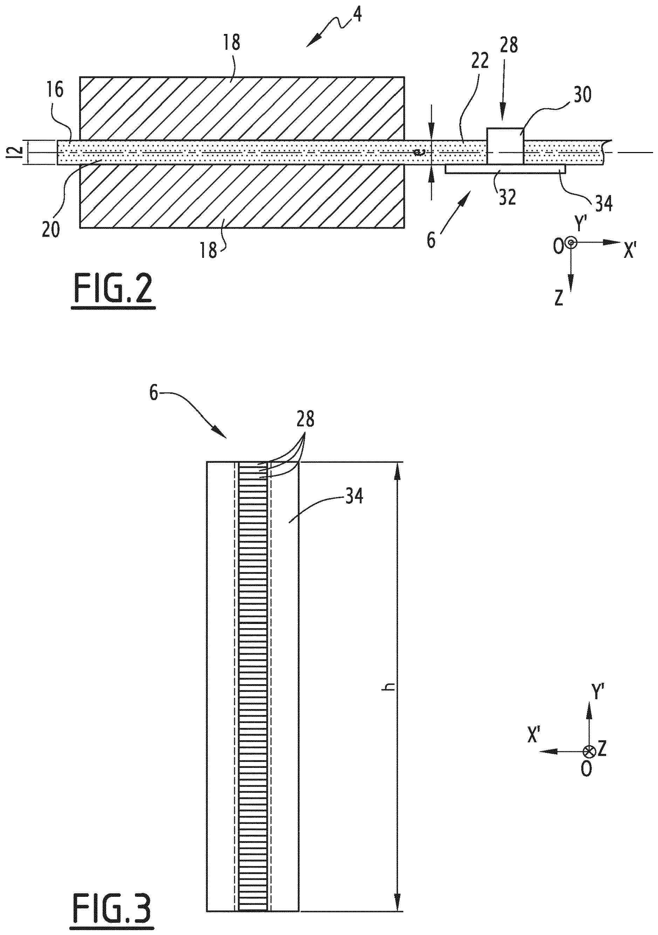

Selon un mode particulier de réalisation illustré sur la Figure 2, le bloc de référence 6 est conformé pour que les scintillateurs 30 soient situés sensiblement dans le faisceau incident 22 et que les photodiodes soient sensiblement situées à l'extérieur du faisceau incident. Ceci permet d'augmenter la durée de vie de photodiodes. En particulier, les scintillateurs 30 sont placés en regard de la fente 20 du collimateur 6 suivant le plan XOY et les circuits imprimés 32 sont disposés en étant décalés latéralement suivant la direction OZ par rapport à la fente 20.

Chaque circuit imprimé 32 est couplé au dispositif de commande et de traitement de signaux 10.

Les capteurs intermédiaires 28 sont disposés adjacents les uns aux autres suivant une ligne de capteurs s'étendant en regard de la fente 20 du collimateur 6. Les capteurs intermédiaires 28 adjacents s'étendent ainsi angulairement sur un angle A correspondant à plus de 50%, notamment à plus de 90% de l'angle d'ouverture $\omega$ du faisceau 22 engendré par le collimateur 6.

L'angle A est défini entre la source et les deux capteurs 28 situés aux extrémités de la ligne de capteurs 28 sur le bloc de référence 6.

Dans l'exemple représenté sur la Figure 2, les capteurs intermédiaires 28 s'étendent linéairement selon un axe parallèle à la direction OY', donc parallèlement à la fente 20. Ils forment ainsi une barrette de capteurs de hauteur h selon la direction OY'.

Selon une variante, le bloc de référence 6 comprend un nombre N1 de capteurs intermédiaires 28 compris entre 100 et 500, notamment 160.

La distance selon l'axe OX' séparant la fente 20 du bloc de référence 6 est avantageusement comprise entre 1 et 2 cm.

Selon une variante illustrée sur la Figure 3, chaque circuit imprimé 32 se trouve sur une plaque verticale 34. La plaque est avantageusement large d'environ 7 mm selon la direction OX' et longue d'environ 1 mètre selon la direction OY'.

En particulier, les scintillateurs 30 sont régulièrement espacés selon la direction OY'. Ils présentent par exemple une section de 4 mm par 4 mm dans le plan X'OZ.

Avantageusement, les scintillateurs 30 sont par exemple à base d'iodure de césium (CsI), de tungstate de cadmium ($CdWO_4$) ou d'oxysulfure de gadolinium (GOS : $Gd_2O_2S$).

Chaque photodiode est apte à recevoir les photons émis par l'un des scintillateurs 30 et à émettre un courant. La photodiode est en outre reliée électriquement à une capacité, elle-même reliée au dispositif de commande et de traitement des signaux 10.

Chaque capteur intermédiaire 28 est ainsi apte à être illuminé par un secteur angulaire individuel du faisceau incident 22 et à engendrer un signal de référence $I_{BR}$ représentatif de l'intensité du faisceau incident 22 dans le secteur angulaire individuel considéré.

L'étendue angulaire de chaque secteur angulaire du faisceau incident reçue par un capteur intermédiaire 28 est par exemple inférieure à 5° et est notamment comprise entre 0,2° et 0,4°. Cette étendue angulaire individuelle peut varier le long de la barrette de capteurs intermédiaires 28, notamment lorsque les capteurs intermédiaires 28 sont alignés suivant une droite.

Le circuit imprimé 32 de chaque capteur intermédiaire 28 est raccordé individuellement au dispositif de commande et de traitement des signaux 10 pour permettre à ce dernier de recevoir un signal de référence $I_{BR}$ provenant de chaque capteur intermédiaire 28, afin de corriger l'image, comme on le décrira plus bas.

Les capteurs de réception 8 sont disposés dans le prolongement du faisceau incident 22. Ils délimitent avec le bloc de référence 6 un espace intermédiaire 36 pour le passage de la charge 11 à radiographier.

Selon une variante, le nombre N2 de capteurs de réception 8 est supérieur au nombre N1 de capteurs intermédiaires 28. N2 est par exemple supérieur à 1000, notamment égal à 1200.

Chaque capteur intermédiaire 28 est avantageusement situé sur une droite reliant un capteur de réception 8 au point focal F de la source 2 de rayons X.

Les capteurs de réception 8 sont adjacents les uns aux autres. Ils s'étendent suivant une ligne brisée située sensiblement dans le plan médian XOY.

Selon une variante, les capteurs de réception 8 sont montés sur un portique 38. Le portique 38 forme par exemple un « L » inversé s'étendant dans le plan médian XOY. La charge 11, par exemple portée par un véhicule 40, est destinée à passer dans l'espace intermédiaire 36 sous ce portique 38.

Les capteurs de réception 8 d'un premier ensemble 42 s'étendent selon la direction OX et forment la base du « L » inversé. Les capteurs de réception 8 du premier ensemble 42 sont situés au-dessus de l'espace intermédiaire 36.

Les capteurs de réception 8 d'un second ensemble 40 s'étendent selon la direction verticale OY et forment la hampe du « L » inversé.

Chaque capteur de réception 8 présente une structure analogue à celle d'un capteur intermédiaire 28. Il comprend un scintillateur et un circuit imprimé comprenant une photodiode et une capacité. En variante, il est possible de réaliser une détection directe, grâce à un capteur de réception 8 en semi conducteur épais, du type CdTe.

Chaque capteur de réception 8 est propre à recevoir un secteur angulaire individuel du faisceau 22 après son passage successif dans le bloc de référence 6, puis dans l'espace intermédiaire 36 éventuellement occupé par la charge 11 à radiographier.

Chaque capteur de réception 8 est apte à engendrer un signal d'image brut $I_{brut,L}$ représentatif de l'intensité du faisceau 22 dans le secteur angulaire individuel considéré, éventuellement après passage dans la charge 11 à radiographier.

Le circuit imprimé de chaque capteur de réception 8 est raccordé individuellement au dispositif de commande et de traitement des signaux 10 pour permettre à ce dernier de recevoir le signal d'image brut $I_{brut,L}$ provenant de chaque capteur de réception 8.

Le dispositif de commande et de traitement des signaux 10 est connecté à la source 2 de rayons X, de manière à pouvoir la contrôler, à chaque capteur de réception 8 et à chaque capteur intermédiaire 28, pour recevoir les signaux $I_{brut,L}$ et $I_{BR}$ correspondant aux doses de rayons X reçues par les capteurs 8, 28.

Le dispositif de commande et de traitement des signaux 10 est propre à recueillir et à traiter les signaux $I_{brut,L}$ et $I_{BR}$ reçus. Le dispositif de commande et de traitement des signaux 10 comporte des moyens de correction de chaque signal d'image brut engendré par un capteur de réception 8 à l'aide du signal de référence obtenu dans le même secteur angulaire à partir d'un capteur intermédiaire 28 pour la même impulsion. Ce signal de référence est par exemple engendré par un capteur intermédiaire 28 situé dans le même secteur angulaire, ou est calculé à partir du signal engendré par au moins un capteur 28 en interpolant ou en extrapolant le signal engendré par le capteur 28 dans le secteur angulaire du capteur de réception 8.

Le dispositif de commande et de traitement des signaux 10 comporte en outre des moyens de formation d'une image sur la base de chaque signal d'image corrigé obtenu à partir des moyens de correction angulaire.

La charge 11 est destinée à être déplacée par rapport à l'installation 1 pour que des tranches successives de la charge 11 soient radiographiées.

Dans une première variante, la charge 11 est portée par un véhicule 40 propre à se déplacer à une vitesse choisie par rapport à la source 2 de rayons X et aux capteurs 8, 28 de manière à traverser le plan XOY.

Selon une variante, le véhicule 40 est destiné à traverser le plan XOY sensiblement perpendiculairement.

En variante, l'installation 1 comporte un ensemble de déplacement (non représenté) de la charge propre à effectuer le déplacement à une vitesse donnée.

La vitesse donnée de déplacement est ainsi comprise entre 0 m/s et 15 m/s. Elle peut être augmentée si la fréquence des impulsions 16 de rayons X est augmentée.

A chaque impulsion 16 de rayons X, une tranche particulière de la charge 11 est radiographiée.

La mise en oeuvre d'un procédé de radiographie selon l'invention d'une charge 11 à l'aide de l'installation 1 va maintenant être décrite dans l'exemple particulier d'une charge 11 portée par un véhicule 40.

Le véhicule 40 portant la charge 11 sur lequel on veut réaliser une détection passe sous le portique 38 contenant les capteurs de réception 8. Le passage dure typiquement entre 10 secondes et 60 secondes selon la longueur de la charge 11 et la vitesse du véhicule 40. La source 2 de rayons X est activée une fois que la cabine du véhicule 40 est passée à travers le plan médian XOY, de façon à ne pas irradier le chauffeur du véhicule 40 si celui-ci est présent dans la cabine. En variante, la source 2 de rayons X peut être activée avant le passage de la cabine du véhicule 40 à travers le plan médian XOY.

Selon un premier mode de réalisation de la radiographie, la source 2 de rayons X émet des impulsions de rayons X à une fréquence donnée, par exemple de 200 Hertz.

Dans ce premier mode de réalisation, les impulsions 16 de rayons X possèdent toutes sensiblement la même énergie intrinsèque E, par exemple environ 6 MeV. Le fonctionnement de la source 2 de rayons X est connu en soi et ne sera pas décrit en détail.

Le collimateur 4 forme un faisceau incident 22 qui éclaire des tranches successives de la charge 11 transportée par le véhicule 40. Ci-après, les tranches successives sont numérotées à l'aide d'un indice k .

A chaque impulsion 16 de rayons X, un faisceau incident 22 d'étendue angulaire $\omega$ est engendré à la sortie du collimateur 4 au niveau de la fente 20. Ce faisceau présente une énergie intrinsèque E sensiblement égale à une énergie de consigne, par exemple 6 MeV.

A chaque impulsion 16 de rayons X, chaque capteur de réception 8 et chaque capteur intermédiaire 28 mesurent une dose de rayons X reçue dans l'espace occupé par leurs scintillateurs 30 respectifs. Dit autrement, chaque capteur de réception 8 et chaque capteur intermédiaire 28 mesurent une intensité reçue dans le secteur angulaire du faisceau 22 occupé par leurs scintillateurs 30 respectifs.

En particulier, le faisceau 22 traverse le bloc de référence 6. Chaque capteur intermédiaire 28 est illuminé par un secteur angulaire du faisceau incident 22 et engendre alors un signal de référence bruts $I_{brut,BR}(i,k)$, où i est le numéro associé au capteur intermédiaire 28, compris entre 1 et N1, et k est le numéro de l'impulsion, correspondant à une tranche de la charge 11 lorsque celle-ci est présente dans l'espace intermédiaire 36.

La méthode de mesure des capteurs 8, 28 est connue en soi. Les rayons X du faisceau 22 déposent une certaine dose dans les scintillateurs 30, dont la désexcitation provoque l'émission de photons visibles. L'énergie des photons émis par chaque scintillateur 30 est convertie en un courant par chaque photodiode. Avantageusement, le courant est ensuite intégré par la capacité qui fournit à ses bornes une tension représentative de la dose reçue. La tension de la capacité constitue le signal utile transmis au dispositif de commande et de traitement des signaux 10.

Puis, après son passage à travers le bloc de référence 6, le faisceau 22 traverse l'espace intermédiaire 36 et une tranche de la charge 11, si celle-ci est présente.

Le faisceau 22 interagit avec la matière présente dans l'espace intermédiaire 36, notamment par absorption des rayons X. Le faisceau 22 présente, après passage dans l'espace intermédiaire 36, une intensité plus ou moins atténuée.

Ensuite, le faisceau 22 plus ou moins atténué est recueilli par les capteurs de réception 8. Chaque capteur de réception 8 est illuminé par un secteur angulaire du faisceau 22 et engendre alors un signal d'image brut $I_{brut,L}(j,k)$, où j est le numéro associé au capteur de réception 8, compris entre 1 et N2, et k est le numéro de l'impulsion, correspondant à une tranche lorsque la charge 11 est présente.

Selon un mode de réalisation, on envoie M impulsions de rayons X, M étant suffisamment important pour couvrir la charge 11 et pour avoir N impulsions dites de « feu nu », c'est-à-dire envoyées en l'absence de charge 11 dans l'espace intermédiaire 36, par exemple après que la charge 11 est passée dans le plan médian XOY. Les impulsions dites de « feu nu » servent de référence pour le gain, comme on le verra ci-dessous.

Le dispositif de commande et de traitement des signaux 10 acquiert donc, pour chaque impulsion k de rayons X, des signaux de référence bruts $I_{brut,BR}(i,k)$ en provenance des capteurs intermédiaires 28 du bloc de référence 6 et des signaux d'image bruts $I_{brut,L}(j,k)$ en provenance des capteurs de réception 8, avec :

> i, indice du capteur intermédiaire, allant de 1 à N1,
> j, indice du capteur de réception, allant de 1 à N2,
> k, indice de l'impulsion, allant de 1 à M, pour une détection d'une durée comprise entre typiquement entre 10 s et 60 s.
> M est par exemple supérieur à 1000, notamment supérieur à 2000 et par exemple égal à 3000.
> N est par exemple compris entre 100 et 300, par exemple égal à 200 environ.

Après des tests usuels de validité des signaux $I_{brut,L}(j,k)$ et $I_{brut,BR}(i,k)$, on corrige ces signaux bruts par les offsets selon une méthode connue en soi.

Puis, on calcule un gain individuel pour chaque capteur intermédiaire 28 en utilisant les impulsions de « feu nu » :

$$VGain_{BR}(i) = \frac{\sum_{k=M-N+1}^{M} I_{brut,BR}(i,k)}{N}$$

avec i = 1 à N1,
et pour chaque capteur de réception 8 :

$$VGain_{L}(j) = \frac{\sum_{k=M-N+1}^{M} I_{brut,L}(j,k)}{N}$$

avec j = 1 à N2.

On réalise ensuite une correction de chaque signal brut obtenu par chaque capteur 8, 28 à chaque impulsion par les gains respectifs :

$$\begin{cases} I_{BR,1}(i,k) = \dfrac{I_{brut,BR}(i,k)}{VGain_{BR}(i)} \\ I_{L,1}(j,k) = \dfrac{I_{brut,L}(j,k)}{VGain_{L}(j)} \end{cases}$$

avec i = 1 à N1, j = 1 à N2, k = 1 à M

Si N1 est différent de N2 comme dans l'exemple, on rééchantillonne angulairement les signaux de référence pour avoir le même nombre de valeurs de référence qu'il y a de capteurs de réception 8, avec une correspondance en angle :

$$I_{BR,2}(j,k) = interp\big(\theta_{BR}(i), I_{BR,1}(i,k), \theta_{L}(j)\big),$$

$\theta_{BR}$ et $\theta_{L}$ étant les angles sous lesquels sont vus le capteur intermédiaire 28 d'indice i et le capteur de réception 8 d'indice j, la fonction interp(x,y,xi) réalisant une interpolation de la fonction y(x) vers yi(xi). Cette interpolation peut par exemple être linéaire.

Pour chaque indice i correspondant à un capteur de réception 8, $I_{BR,2}(i,k)$ est donc un signal de référence obtenu dans le même secteur angulaire que celui du capteur de réception 8. Ce signal de référence correspond à la dose reçue par un capteur intermédiaire fictif, traversé par le même secteur angulaire du faisceau de rayons X que le capteur de réception 8 d'indice j.

Puis, on divise par les valeurs de référence les signaux d'image déjà corrigés par les offsets et par les gains :

$$I_{corr,L}(j,k) = \frac{I_{L,1}(j,k)}{I_{BR,2}(j,k)},$$

la correspondance en secteur angulaire étant respectée,

L'image est ainsi corrigée des disparités angulaires pour une même impulsion k et des disparités entre impulsions.

Selon un deuxième mode de réalisation, l'énergie intrinsèque E(k) de chaque impulsion 16 de rayons X est déterminée sur la base des signaux de référence $I_{BR}(i,k)$ engendrés par les différents capteurs intermédiaires 28 pour l'impulsion en question.

En particulier, une distribution angulaire des intensités du faisceau 22 $I_{BR}(\theta,k)$ est déterminée grâce aux valeurs individuelles des signaux de référence $I_{BR}(i,k)$ et en les associant chacune à un angle $\theta$ donné correspondant à l'angle moyen du capteur intermédiaire 28 d'indice i par rapport à la direction principale OX'.

La distribution angulaire mesurée pour chaque impulsion k est normalisée par sa valeur maximale, après filtration éventuelle si le bruit est suffisamment élevé pour perturber les mesures. On obtient ainsi une distribution angulaire normalisée $I_{BR}(\theta,k)^*$.

Celle-ci est comparée à une base de données de distributions angulaires normalisées obtenues par simulation pour une gamme d'énergies intrinsèques E. Cette simulation est réalisée sur la base de la géométrie connue de l'installation 1 en utilisant par exemple le logiciel GEANT.

On détermine alors l'énergie intrinsèque E(k) de chaque impulsion k comme étant l'énergie intrinsèque E associée à la distribution angulaire normalisée de la base de données la plus proche de la distribution angulaire normalisée $I_{BR}(\theta,k)^*$.

Plus la couverture angulaire du faisceau 22 par le bloc de référence 6 est grande, meilleure est la détermination de l'énergie intrinsèque E des impulsions 16 de rayons X.

On détermine aussi une énergie intrinsèque de gain $E_L$ sur la base d'une impulsion de « feu nu », par exemple sur la base du vecteur gain du bloc de référence 6, $VGain_{BR}(i)$, avec i = 1 à N1. Ceci peut se faire de la manière décrite ci-dessus pour la détermination de l'énergie intrinsèque E(k) de chaque impulsion k. On obtient l'énergie intrinsèque de gain $E_L$ représentative de la distribution angulaire du profil $VGain_{BR}(i)$.

On réalise alors une correction fine $I_{corr,L,2}(j,k)$ = $I_{corr,L}(j,k) \cdot f(E(k),E_L)$ où la fonction f est une fonction de l'énergie intrinsèque E(k) de l'impulsion 16 de rayons X et de l'énergie intrinsèque de gain $E_L$.

$I_{coor,L,2}(j,k)$ fournit les valeurs des pixels de l'image radiographique corrigée.

La fonction $f(E(k),E_L)$ de correction fine est prédéterminée soit expérimentalement, soit par des calculs de simulation tenant compte de la géométrie de l'installation de radiographie, du spectre des impulsions 16 de rayons X et de la sensibilité spectrale des capteurs intermédiaires 28 et des capteurs d'image 8.

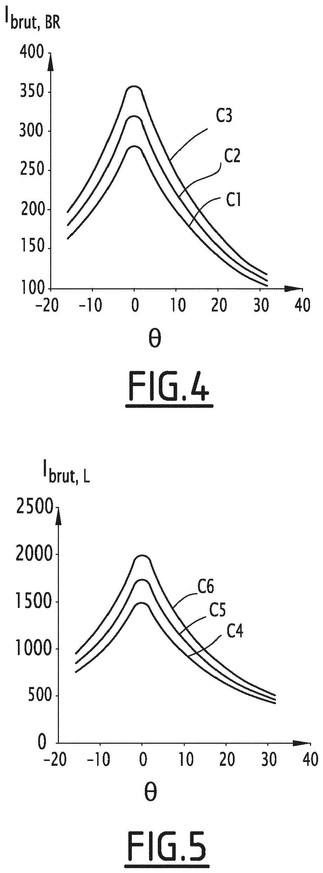

On décrit ci-après un exemple de méthode de détermination de la fonction f de correction fine, en référence aux Figures 4 à 6.

On simule des signaux de référence $I_{BR}$ engendrés par les capteurs intermédiaires 28 en fonction de l'angle θ sous lesquels ils sont vus, pour une pluralité d'impulsions 16 de rayons X d'énergies intrinsèques E1, E2, E3 différentes.

Des exemples de signaux de références simulés sont illustrés sur la Figure 4 :

- pour la courbe C1, à une énergie intrinsèque E1 par exemple de 5,5 MeV,
- pour la courbe C2, à une énergie intrinsèque E2 par exemple de 6,0 MeV,
- pour la courbe C3, à une énergie intrinsèque E3 par exemple de 6,5 MeV.

Puis, on simule des signaux images bruts $I_L$ engendrés par les capteurs de réception 8 en fonction de l'angle θ sous lesquels ils sont vus, pour les mêmes impulsions 16 de rayons X d'énergies intrinsèques E1, E2, E3, aucune charge 11 n'étant présente dans l'espace intermédiaire 36. La Figure 5 illustre les résultats obtenus :

- pour la courbe C4, à l'énergie intrinsèque E1,
- pour la courbe C5, à l'énergie intrinsèque E2,
- pour la courbe C6, à l'énergie intrinsèque E3.

On normalise les signaux à l'aide des signaux obtenus avec l'énergie intrinsèque E2, considérés comme représentatifs du vecteur gain :

$$
\begin{cases}
I_{BR,1}(\theta) = \dfrac{I_{brut,BR}(\theta)}{\left(I_{brut,BR}(\theta)\right)_{E=E2}} \\[3mm]
I_{L,1}(\theta) = \dfrac{I_{brut,L}(\theta)}{\left(I_{brut,L}(\theta)\right)_{E=E2}}
\end{cases}
$$

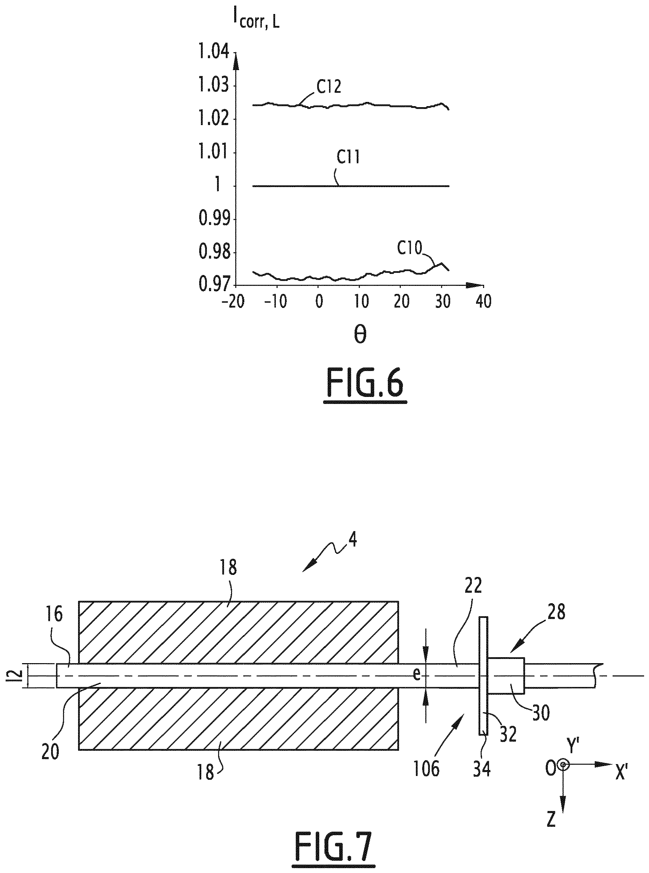

On calcule ensuite le quotient $I_{coor,L}(\theta) = I_{brut,L,1}(\theta) / I_{BR,2}(\theta)$. La Figure 6 illustre les résultats obtenus :

- pour la courbe C10, à l'énergie intrinsèque E1,
- pour la courbe C11, à l'énergie intrinsèque E2,
- pour la courbe C12, à l'énergie intrinsèque E3.

Ces courbes ne présentent quasiment pas de dépendance en θ.

La fonction f est obtenue à partir des signaux $I_{corr,L}(\theta)$.

Elle est avantageusement obtenue comme l'inverse de la moyenne des signaux $I_{corr,L}(\theta)$ :
$f(E1,E2)=1/\overline{I_{corr,L}(\theta)}$, $\overline{I_{corr,L}(\theta)}$ étant la moyenne sur θ des valeurs $I_{corr,L}(\theta)$ obtenue pour une impulsion de rayons X d'énergie intrinsèque E1, les signaux $I_{brut,BR}(\theta)$ et $I_{brut,L}(\theta)$ ayant été respectivement normalisés par les signaux $I_{brut,BR}(\theta)$ et $I_{brut,L}(\theta)$ obtenus pour une impulsion de rayons X d'énergie intrinsèque E2, faisant office de vecteur gain.

Sur l'exemple de la figure 6, la moyenne de la courbe C12(θ) est environ 1,025 ; la moyenne de la courbe C11(θ) est environ 1 ; la moyenne de la courbe C10(θ) est environ 0,975. Ceci permet de déterminer que :

- f(E1,E2) = 1/0,975,
- f(E2,E2) = 1
- f(E3,E2) = 1/1,025.

On comprend qu'il est ainsi possible de déterminer la fonction f de correction fine pour tout couple de valeurs d'énergie intrinsèque.

Les corrections successivement appliquées aux signaux d'image bruts $I_{brut,L}(j,k)$ fournissent une image corrigée $I_{coor,L,2}(j,k)$ qui ne privilégie aucune direction angulaire θ, ni aucune tranche k de la charge 11.

Selon un troisième mode de réalisation de la radiographie, dit « entrelacé », la source 2 émet par exemple des impulsions 16 de rayons X d'énergie intrinsèque 6,0 MeV à une cadence de 200 Hertz et, en alternance, des impulsions 16 de rayons X d'énergie 4,0 MeV à une cadence de 200 Hertz. On obtient alors deux images radiographiques correspondant à deux énergies intrinsèques E1 et E2 distinctes.

Chaque image est ensuite corrigée de la manière décrite ci-dessus dans le deuxième mode de réalisation. Pour la première image corrigée, la valeur du pixel de coordonnées $(j,k)$ est donnée par $S1(j,k) = I_{coor,L,2}(j,k)$. Pour la deuxième image corrigée, la valeur du pixel de coordonnées $(j,k)$ est donnée par $S2(j,k) = I_{coor,L,2}(j,k)$.

On reconstitue alors, à partir des deux image corrigées, une image unique, dite de « discrimination chimique », qui associe à chaque pixel de coordonnées $(j,k)$ une valeur $X(j,k)$ représentative du numéro atomique moyen de matériaux de la charge 11 traversés par les impulsion 16 de rayons X de rang k.

$X(j,k)$ est obtenu grâce à une fonction g, ou « table de conversion », qui dépend des énergies intrinsèques des impulsions de rayons X ayant généré les signaux pour le pixel considéré :

$$X(j,k) = g(S1(j,k), S2(j,k), E1(k), E2(k), j)$$

Une méthode de détermination de la fonction g est la suivante. On simule deux impulsions de rayons X d'énergies intrinsèques E1 et E2. On calcule les signaux S1 et S2 après la traversée d'une charge test constituée d'un matériau MX de numéro atomique X et d'épaisseur e. En faisant varier X et e, on établit des courbes $S2 = fX(j, E1, E2, S1)$, où la fonction fX dépend seulement du matériau MX traversé. La connaissance de S1, S2 et j permet de remonter à X et détermine donc $g(S1, S2, E1, E2, j)$.

La connaissance des deux énergies intrinsèques E1(k) et E2(k) pour chaque pixel permet de choisir une table de conversion adaptée aux deux énergies intrinsèques réelles des impulsions de rayons X ayant généré les signaux et non à des valeurs de consigne (dans l'exemple 4,0 et 6,0 MeV).

Avantageusement, on peut prédéterminer des tables g pour un ensemble de valeurs discrètes de E1 et E2 couvrant les plages d'énergies dans lesquelles E1(k) et E2(k) se situent.

Sans le bloc de référence 6, ce ne serait pas possible et on devrait, dans ce cas, se contenter d'une table de conversion figée, prédéfinie sur uniquement les valeurs de consignes des énergies intrinsèques et non sur les énergies intrinsèques réelles des impulsions 16 de rayons X.

Dans tous les modes de réalisation de l'invention, il est donc possible de réaliser une correction plus efficace de l'image radiographique $I_L(j,k)$, conduisant à une image d'une qualité améliorée $I_{coor,L}(j,k)$ ou $I_{coor,L,2}(j,k)$. Ceci est rendu possible grâce au bloc de référence 6 « étendu », c'est-à-dire comprenant des capteurs intermédiaires 28 vus selon des angles distincts dans le plan médian XOY.

La connaissance des énergies intrinsèques améliore non seulement la correction des images, mais encore permet d'utiliser une table de conversion adaptée, considérablement plus proche du besoin. Ainsi l'on s'affranchit du fait que l'énergie intrinsèque des impulsions 16 de rayons X n'est pas stable.

Dans une variante, lorsque le bloc de référence 6 ne couvre pas toute l'ouverture angulaire ω du faisceau incident 22, il est possible de réaliser des interpolations et/ou des extrapolations pour corriger les signaux d'image en provenance des capteurs de réception 8 correspondant à des directions angulaires non couvertes par le bloc de référence 6.

Aussi, il est avantageux, pour limiter les interpolations et/ou les extrapolations, de disposer d'un bloc de référence 6 occupant au moins 50%, de préférence au moins 90%, et si possible 100% de l'ouverture angulaire ω du faisceau incident.

Des capteurs intermédiaires 28 alignés, si possible régulièrement espacés, selon une direction du plan médian XOY facilitent les opérations de correction.

Lorsque cette direction d'alignement des capteurs intermédiaires 28 est perpendiculaire à la direction principale OX' du faisceau 22, les calculs sont facilités, car en général symétriques pour l'angle θ.

Les scintillateurs 30 à base d'iodure de césium, de tungstate de cadmium ou d'oxysulfure de gadolinium donnent de bons résultats, à la fois pour les capteurs de réception 8 et pour les capteurs intermédiaires 28.

Le fait que les capteurs intermédiaires 28 aient des scintillateurs 30 en forme barreaux divisés en pixels physiques permet de couvrir un secteur angulaire de manière continue et de simplifier les calculs de correction.

En variante, les capteurs intermédiaires 28 du bloc de référence 6 sont répartis suivant une ligne courbe (non-représentée), par exemple suivant un arc de cercle, par exemple centré sur le point focal F de la source 2 de rayons X.

Dans une autre variante encore, le bloc de référence 6 comporte au moins deux lignes adjacentes de capteurs intermédiaires 28 de référence propres à mesurer des fractions de l'épaisseur e du faisceau incident 22 selon la direction OZ.

La Figure 7 illustre une variante du dispositif représenté sur la Figure 2. Le dispositif représenté sur la Figure 8 est structurellement similaire à celui représenté sur la Figure 2. Il diffère par l'orientation d'un bloc de référence 106, qui se déduit de celle du bloc de référence 6 de la Figure 2 par une rotation de 90° dans le sens horaire selon l'axe OY'. Dans la configuration présentée sur la Figure 8, le faisceau 22 traverse donc le circuit imprimé 32 avant de traverser les scintillateurs 30.

Dans une autre variante, la charge 11 peut être radiographiée selon d'autres angles que celui représenté par la direction principale OX' sur la Figure 1, qui illustre une radiographie par le côté. Par exemple, l'installation 1 peut être agencée pour radiographier la charge 11 par le haut, ou par en dessous, ou selon toute autre incidence. Pour ce faire, on modifie la position relative de l'installation 1 par rapport à la charge 11, le fonctionnement de l'installation restant le même.

## Revendications

**1.** Procédé de radiographie d'une charge (11) pour réaliser une détection, le procédé comprenant les étapes suivantes :

a) on émet une impulsion (16) de rayons X divergents à partir d'une source (2), la charge (11) et la source étant en mouvement relatif l'une par rapport à l'autre ;
b) à partir de l'impulsion (16) de rayons X, on forme un faisceau incident (22) de rayons X grâce à un collimateur (4) et on éclaire une tranche de la charge (11) s'étendant selon un plan médian (XOY) ; et
c) on recueille les rayons X (22) après leur passage dans la charge (11) dans des capteurs de réception (8) situés derrière la charge (11) dans le prolongement du faisceau incident (22) et on génère des signaux d'image bruts correspondant aux doses de rayons X reçues par les capteurs de réception ;

les étapes a) et b) étant itérées sur des tranches successives de la charge (11) de manière à obtenir une image radiographique de la charge (11) ;
le procédé étant **caractérisé en ce qu'**il comprend en outre une étape d) dans laquelle on mesure des doses de rayons X reçues par au moins deux capteurs intermédiaires (28) d'un bloc de référence (6) situés dans le faisceau incident (22), entre la source (2) et la charge (11), de manière à être traversés par au moins deux secteurs angulaires distincts du faisceau incident (22) délimité à l'étape b), on génère des signaux de référence indépendants correspondant aux doses mesurées par les capteurs intermédiaires (28) dans chaque secteur angulaire, et on corrige les signaux d'image bruts obtenus à l'étape c) à l'aide des signaux de référence, et dans lequel, à l'étape d), on évalue une énergie intrinsèque (E) du faisceau incident (22) à partir des signaux de référence et on corrige les signaux d'image bruts obtenus à l'étape c) par un calcul utilisant ladite énergie intrinsèque (E), l'évaluation de l'énergie intrinsèque (E) comportant les phases suivantes :

- on établit une distribution angulaire mesurée des signaux de référence obtenus pour une impulsion (16) de rayons X donnée à partir des signaux de références mesurés ;

- on compare la distribution angulaire mesurée avec des distributions angulaires prédéterminées correspondant à différentes énergies intrinsèques (E) ; et
- on associe la distribution angulaire mesurée à une distribution angulaire prédéterminée et on attribue à l'impulsion (16) de rayons X donnée l'énergie intrinsèque (E) de la distribution angulaire prédéterminée.

**2.** Procédé de radiographie selon la revendication 1, **caractérisé en ce que**, à l'étape d), le faisceau incident (22) délimité à l'étape b) présentant une ouverture angulaire donnée (ω) dans le plan médian, on mesure des doses de rayons X reçues par une pluralité de capteurs intermédiaires (28) du bloc de référence (6) situés dans le faisceau incident (22) de manière à occuper une ouverture angulaire correspondant à au moins 50% de ladite ouverture angulaire donnée (ω), de préférence au moins 90%.

**3.** Procédé de radiographie selon l'une quelconque des revendications 1 et 2, **caractérisé en ce que**, à l'étape d), on corrige chaque signal d'image brut généré à l'étape c) à l'aide d'un capteur de réception (8) dans un secteur angulaire donné du faisceau (22) par un calcul utilisant un signal de référence obtenu pour le même secteur angulaire donné à partir des signaux de référence générés par les capteurs intermédiaires (28).

**4.** Procédé de radiographie selon l'une quelconque des revendications 1 à 3, **caractérisé en ce que**, à l'étape d), on ré-échantillonne les signaux de référence engendrés par les capteurs intermédiaires (28) pour obtenir les signaux de référence en correspondance angulaire avec les signaux d'image bruts.

**5.** Procédé de radiographie selon la revendication 4, **caractérisé en ce que**, à l'étape d), on détermine en outre une énergie intrinsèque de gain du bloc de référence (6) et on tient compte de ladite énergie intrinsèque de gain du bloc de référence (6) dans ladite correction des signaux d'image bruts obtenus à l'étape c).

**6.** Procédé selon l'une quelconque des revendications 1 à 5, **caractérisé en ce que**, à l'étape a), on émet une première impulsion (16) de rayons X à une première énergie intrinsèque de consigne et on émet ensuite une deuxième impulsion (16) de rayons X à une deuxième énergie intrinsèque de consigne distincte de la première énergie intrinsèque de consigne, le procédé comprenant les étapes suivantes :

- on détermine l'énergie intrinsèque (E) correspondant à chaque impulsion (16) de rayons X ;
- on corrige les signaux d'image bruts correspondant respectivement à chaque impulsion (16) de rayons X à l'aide de l'énergie intrinsèque (E) déterminée respectivement pour chaque impulsion (16) de rayons X ; et

- on reconstitue une image unique à partir des signaux d'image corrigés, ladite image unique présentant des informations représentatives des numéros atomiques moyens de matériaux de la charge.

7. Procédé selon la revendication 6, **caractérisé en ce que** l'image unique est reconstituée, pour chaque pixel, à partir des signaux d'image corrigés dudit pixel et d'une table de conversion dépendant des énergies intrinsèques des première et deuxième impulsions de rayons X ayant généré les signaux d'image bruts dudit pixel.

**Patentansprüche**

1. Röntgenverfahren einer Ladung (11) zum Durchführen einer Erfassung, wobei das Verfahren die folgenden Schritte aufweist:

   a) Ausstahlen eines Pulses (16) von Röntgenstrahlen, welche von einer Quelle (2) aus divergieren, wobei die Ladung (11) und die Quelle relativ zueinander eine Bewegung ausführen,
   b) aus dem Puls (16) von Röntgenstrahlen, Formen eines einfallenden Strahlenbündels (22) von Röntgenstrahlen durch einen Kollimator (4) und Bestrahlen einer Tranche der Ladung (11), welche sich auf einer Mittelebene (XOY) erstreckt, und
   c) Erfassen der Röntgenstrahlen (22) nach deren Hindurchtreten durch die Ladung (11) durch Empfangssensoren (8), welche hinter der Ladung (11) auf der Verlängerung des einfallenden Strahlenbündels (22) angeordnet sind, und Erzeugen von Rohbildsignalen, welche zu Röntgenstrahlungsdosen korrespondieren, die durch die Empfangssensoren empfangen werden,

   wobei die Schritte a) und b) über die Tranchen der Ladung (11) in der Art des Erhaltens eines Röntgenbildes der Ladung (11) sukzessive wiederholt werden,
   das Verfahren **dadurch gekennzeichnet, dass** es weiter einen Schritt d) aufweist, bei welchem Röntgenstrahldosen, die von zumindest zwei Zwischensensoren (28) eines Referenzblocks (6) empfangen werden, der im einfallenden Strahlenbündel (22) zwischen der Quelle (2) und der Ladung (11) angeordnet ist, gemessen werden, in der Art, dass zumindest zwei verschiedene Winkelsektoren des einfallenden Strahlenbündels (22) durchquert werden, das im Schritt b) abgegrenzt wird, bei welchem unabhängige Referenzsignale erzeugt werden, die zu Dosen korrespondieren, die durch die Zwischensensoren (28) in jedem Winkelsektor gemessen werden, und bei welchem die Rohbildsignale, welche im Schritt c) erhalten werden, mit Hilfe der Referenzsignale korrigiert werden, und
bei welchem im Schritt d) eine inhärente Energie (E) des einfallenden Strahlenbündels (22) aus den Referenzsignalen evaluiert wird und die im Schritt c) erhaltenen Rohbildsignale korrigiert werden durch eine Berechnung unter Verwendung der inhärenten Energie (E), wobei das Evaluieren der inhärenten Energie (E) die folgenden Phasen aufweist:

   - Ermitteln einer gemessenen Winkelverteilung der Referenzsignale, die für einen gegebenen Puls (16) von Röntgenstrahlen erhalten wird, aus den gemessenen Referenzsignalen,
   - Vergleichen der gemessenen Winkelverteilung mit vorbestimmten Winkelverteilungen, die zu verschiedenen inhärenten Energien (E) korrespondieren, und
   - Assoziieren der gemessenen Winkelverteilung mit einer vorbestimmten Winkelverteilung und Zuordnen zum gegebenen Puls (16) von Röntgenstrahlen der inhärenten Energie (E) der vorbestimmten Winkelverteilung.

2. Röntgenverfahren gemäß Anspruch 1, **dadurch gekennzeichnet, dass** im Schritt d) das einfallende Strahlenbündel (22), welches in dem Schritt b) abgegrenzt wird, in der Mittelebene einen gegebenen Öffnungswinkel (ω) aufweist, wobei die Dosen der Röntgenstrahlen gemessen werden, welche durch eine Mehrzahl von Zwischensensoren (28) des Referenzblocks (6) empfangen werden, der im einfallenden Strahlenbündel (22) in der Art angeordnet ist, einen Öffnungswinkel einzunehmen, welcher zu zumindest 50% des gegebenen Öffnungswinkels (ω) korrespondiert, bevorzugt zu zumindest 90%.

3. Röntgenverfahren gemäß irgendeinem der Ansprüche 1 und 2, **dadurch gekennzeichnet, dass** im Schritt d) jedes Rohbildsignal, welches im Schritt c) mittels eines Empfangssensors (8) erzeugt wird, in einem gegebenen Winkelsektor des Strahlenbündels (22) durch eine Berechnung unter Verwendung eines Referenzsignals korrigiert wird, welches für den gleichen, gegebenen Winkelsektor aus den Referenzsignalen, die durch die Zwischensensoren (28) erzeugt werden, erhalten wird.

4. Röntgenverfahren gemäß irgendeinem der Ansprüche 1 bis 3, **dadurch gekennzeichnet, dass** im Schritt d) eine erneute Probe der Referenzsignale genommen wird, welche durch die Zwischensensoren (28) erzeugt werden, um die Referenzsignale winkelkorrespondierend zu den Rohbildsignalen zu erhalten.

5. Röntgenverfahren gemäß Anspruch 4, **dadurch gekennzeichnet, dass** im Schritt d) weiter eine inhärente Energie der Verstärkung des Referenzblocks (6) ermittelt wird und die inhärente Energie der Verstärkung des Referenzblocks (6) bei der Korrektur der im Schritt c) erhaltenen Rohbildsignale in Betracht gezogen werden.

6. Verfahren gemäß irgendeinem der Ansprüche 1 bis 5, **dadurch gekennzeichnet, dass** im Schritt a) ein erster Puls (16) von Röntgenstrahlen mit einer ersten hinterlegten, inhärenten Energie ausgestrahlt wird und dann ein zweiter Puls (16) von Röntgenstrahlen mit einer zweiten hinterlegten, inhärenten Energie ausgestrahlt wird, welche von der ersten hinterlegten, inhärenten Energie verschieden ist, wobei das Verfahren die folgenden Schritte aufweist:

   - Ermitteln der inhärenten Energie (E), welche zu jedem Puls (16) von Röntgenstrahlen korrespondiert,
   - Korrigieren der Rohbildsignale, welche jeweilig zu jedem Puls (16) von Röntgenstrahlen korrespondieren, mittels der inhärenten Energie (E), welche jeweilig für jeden Puls (16) von Röntgenstrahlen ermittelt wird, und
   - Neu Bilden eines einzigartigen Bildes aus den korrigierten Bildsignalen, wobei das einzigartige Bild Informationen aufweist, welche für mittlere Ordnungszahlen der Materialien der Ladung repräsentativ sind.

7. Verfahren gemäß Anspruch 6, **dadurch gekennzeichnet, dass** das einzigartige Bild für jeden Pixel aus den korrigierten Bildsignalen des Pixels und einer Konversationstabelle neu gebildet wird, die von den inhärenten Energien des ersten und des zweiten Pulses von Röntgenstrahlen abhängig sind, welche die Rohbildsignale des Pixels erzeugt haben.

**Claims**

1. A method for the radiography of a load (11) in order to perform detection, the method comprising the following steps:

   a) emitting a pulse (16) of divergent x-rays from a source (2), the load (11) and the source being in motion relative to one another;
   b) from the x-ray pulse (16), forming an incident x-ray beam (22) using a collimator (4), and irradiating a section of the load (11) extending along a median plane (XOY); and
   c) collecting the x-rays (22) after they pass through the load (11) in receiving sensors (8) situated behind the load (11) in the extension of the incident beam (22), and generating raw image signals corresponding to the x-ray doses received by the receiving sensors;

steps a) and b) being iterated on successive sections of the load (11) so as to obtain a radiographic image of the load (11);
the method being **characterized in that** it further comprises a step d) in which a measurement is done of the x-ray doses received by at least two intermediate sensors (28) of a reference block (6) situated in the incident beam (22) so as to be passed through by at least two separate angular sectors of the incident beam (22) delimited in step b), generating independent reference signals corresponding to the doses measured by the intermediate sensors (28) in each angular sector, and correcting the raw image signals obtained in step c) using reference signals, and
wherein, in step d), an intrinsic energy (E) of the incident beam (22) is evaluated from the reference signals and the raw image signals obtained in step c) are corrected through a calculation using said intrinsic energy (E).
the evaluation of the intrinsic energy (E) including the following phases:

   - a measured angular distribution of the reference signals obtained for a given x-ray pulse (16) from measured reference signals is established;
   - the measured angular distribution is compared with predetermined angular distributions corresponding to different intrinsic energies (E); and
   - the measured angular distribution is associated with a predetermined angular distribution, and the intrinsic energy (E) of the predetermined angular distribution is assigned to the given x-ray pulse (16).

2. The radiography method according to claim 4, **characterized in that**, in step d), the incident beam (22) delimited in step b) having a given angular opening ($\omega$) in the median plane, x-ray doses received by a plurality of intermediate sensors (28) of the reference block (6) situated in the incident beam (22) so as to occupy an angular opening corresponding to at least 50% of said given annular opening ($\omega$), preferably at least 90%, are measured.

3. The radiography method according to claim 1 or 2, **characterized in that**, in step d), each raw image signal generated in step c) is corrected using a receiving sensor (8) in a given angular sector of the beam (22) through a calculation using a reference signal obtained for the same given angular sector from reference sectors generated by the intermediate sensors (28).

4. The radiography method according to any one of claims 1 to 3, **characterized in that**, in step d), the reference signals created by the intermediate sensors (28) are resampled in order to obtain the reference signals angularly corresponding with the raw image signals.

5. The radiography method according to claim 4, **characterized in that**, in step d), an intrinsic gain energy of the reference block (6) is further determined and said intrinsic energy of the reference block (6) is taken into account in correcting the raw image signals obtained in step c).

6. The method according to any one of claims 1 to 5, **characterized in that**, in step a), a first x-ray pulse (16) is emitted at a first intrinsic reference energy, and a second x-ray pulse (16) is next emitted at a second intrinsic reference energy separate from the first intrinsic reference energy, the method comprising the following steps:

   - determining the intrinsic energy (E) corresponding to each x-ray pulse (16);
   - correcting the raw image signals respectively corresponding to each x-ray pulse (16) using the intrinsic energy (E) respectively determined for each x-ray pulse (16); and
   - reconstituting a unique image from the corrected image signals, said unique image having information representative of the average atomic numbers of materials of the load.

7. The method according to claim 6, **characterized in that** the unique image is reconstituted, for each pixel, from the corrected image signals of said pixel and a conversion table depending on the intrinsic energies of the first and second x-ray pulses having generated the raw images of said pixel.

FIG.1

**FIG.2**

**FIG.3**

$I_{brut, BR}$

FIG.4

$I_{brut, L}$

FIG.5

## FIG.6

## FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4907157 A
- US 4069422 A

- EP 2293049 A